(19) Europäisches Patentamt
European Patent Office
Office européen des brevets

(11) EP 4 684 653 A1

# (12) EUROPEAN PATENT APPLICATION
published in accordance with Art. 153(4) EPC

(43) Date of publication:
**28.01.2026 Bulletin 2026/05**

(21) Application number: **24881245.5**

(22) Date of filing: **28.08.2024**

(51) International Patent Classification (IPC):
***A24B 15/14** (2006.01)* ***A24B 15/18** (2006.01)*
***A24D 3/16** (2006.01)* ***A24D 3/17** (2020.01)*
***A24B 9/00** (2006.01)*

(52) Cooperative Patent Classification (CPC):
Y02E 60/10

(86) International application number:
**PCT/CN2024/115108**

(87) International publication number:
**WO 2025/086877 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 CN 202311409516**

(71) Applicant: **China Tobacco Hunan Industrial Co., Ltd.**
**Changsha, Hunan 410007 (CN)**

(72) Inventors:
- **YIN, Dafeng**
  **Changsha, Hunan 410007 (CN)**
- **KONG, Bo**
  **Changsha, Hunan 410007 (CN)**
- **DAI, Lin**
  **Changsha, Hunan 410007 (CN)**
- **QU, Yongbo**
  **Changsha, Hunan 410007 (CN)**
- **DENG, Changjian**
  **Changsha, Hunan 410007 (CN)**
- **DING, Sha**
  **Changsha, Hunan 410007 (CN)**
- **GONG, Shuguo**
  **Changsha, Hunan 410007 (CN)**
- **JIN, Yong**
  **Changsha, Hunan 410007 (CN)**
- **ZHAO, Guoling**
  **Changsha, Hunan 410007 (CN)**
- **HUANG, Ping**
  **Changsha, Hunan 410007 (CN)**
- **HUANG, Yiqing**
  **Changsha, Hunan 410007 (CN)**

(74) Representative: **Stellbrink & Partner Patentanwälte mbB**
**Widenmayerstrasse 10**
**80538 München (DE)**

## (54) ADHESIVE PASTE@GROUND TOBACCO ASH COMPOSITE MATERIAL, PREPARATION THEREOF, AND USES THEREOF IN NOVEL TOBACCO PRODUCT AND TOBACCO SHEET

(57) The present application relates to the field of preparation of novel tobacco sheets, and in particular to a preparation method for an adhesive paste @ ground tobacco ash composite material. The preparation method comprises: performing first-stage coating on a vaporizing agent and an inorganic material in an adhesive paste preparation tank to prepare an adhesive paste; then mixing the adhesive paste with a hydrophobic agent, so as to achieve second-stage coating, and then performing third-stage coating on the adhesive paste obtained by the second-stage coating and ground tobacco ash in a trough mixer to prepare the adhesive paste @ ground tobacco ash composite material. The present application further comprises the composite material prepared by means of the preparation method, and uses of the composite material in a novel tobacco and a tobacco sheet. In the present application, the preparation method can effectively mitigate the problem of moisture absorption of the sheet, and can promote the uniform and effective release of the vaporizing agent.

EP 4 684 653 A1

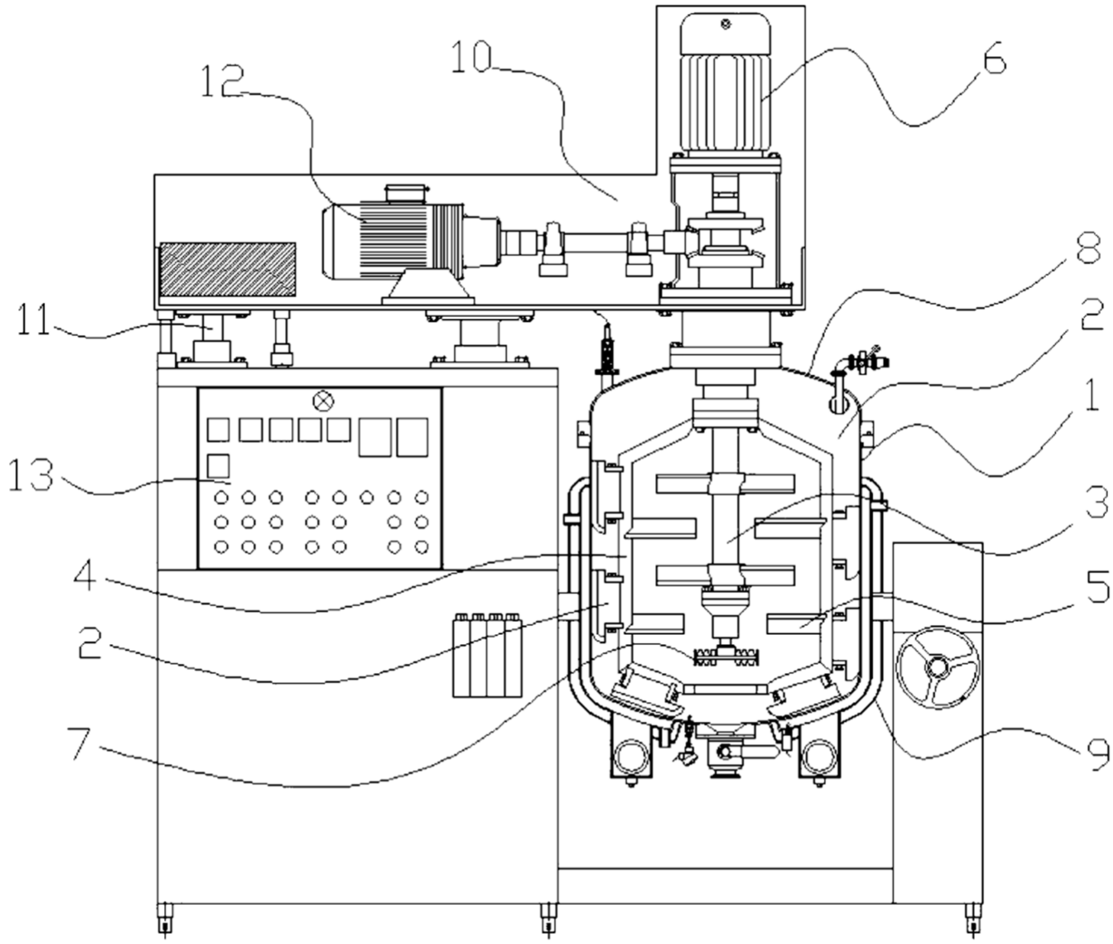


FIG. 1

## Description

This application claims the priority to Chinese Patent Application with the application No. 2023114095167 and the publication No. CN118020990A, titled "ADHESIVE PASTE@GROUND TOBACCO ASH COMPOSITE MATERIAL, PREPARATION THEREOF, AND USES THEREOF IN NOVEL TOBACCO PRODUCT AND TOBACCO SHEET", filed on October 27, 2023 with the China National Intellectual Property Administration, which is incorporated herein by reference in its entirety.

## FIELD

The present disclosure relates to the technical field of new tobacco, and in particular to sheets of new tobacco products.

## BACKGROUND

With the development of society, people pay more and more attention to health, and a product to reduce the harm of cigarettes-heated cigarettes stand out. However, in order to make this product meet consumers' requirements for smoke quantity and improve consumers' experience, the smoking agent such as glycerin and propylene glycol with a weight ratio of 5% to 20% is usually added directly to the surface of tobacco shreds and stem shreds, or added to the adhesive of reconstituted tobacco leaves by thick paste method or rolling method or extrusion molding method, or sprayed on the surface of reconstituted tobacco leaves by dry method, or coated on the sheet base of reconstituted tobacco leaves by paper making method, and the smoking material of heated cigarette manufactured by the above-mentioned method has following disadvantages: because the smoking agent is used in a large amount, it will stay on the surface of the carrier, and because the atomizing agent is a strong water-absorbing material, the smoking material manufactured by the above-mentioned method is easy to absorb moisture, and there will be quality problems such as agglomeration, material blocking, water wet lump, etc. during the tobacco cutting process, there will be quality defects such as blocking the cigarette gun of the cigarette maker, causing unsmooth rolling, turning around the joint, air leakage, low cigarette hardness, cigarette wrinkling, etc. during the cigarette rolling process, there will be quality problems such as moisture absorption, yellow spots and mildew in packaging and storage, and there will be problems such as uneven quantity of smoke at each mouth, increased smoke temperature, soft cigarette moisture absorption and cigarette macula in the process of smoking by consumers. At the same time, the subsequent processing of smoking materials manufactured by the above-mentioned method requires that the humidity of the processing environment should be controlled at no more than 42%, and in this environment, it will not only bring huge energy consumption, but also bring discomfort to producers.

Aiming at the problem of moisture absorption and yellow spots on sheets, china patent document with publication number of CN111165870A discloses a long shelf-life low-hazard smoke-enhanced cigarette, which comprises cigarette paper, a filter tip and an aerosol generating matrix, wherein the aerosol generating matrix comprises smoke-enhanced tobacco sheets and/or smoke-enhanced tobacco shreds, and the tobacco sheets raw materials for manufacturing the smoke-enhanced tobacco sheets comprise traditional tobacco sheet paste and a smoke enhancer. The smoke-enhanced tobacco shreds comprises traditional tobacco shreds and a smoke enhancer, in which the smoke enhancer has low hygroscopy, which fundamentally solves the problem that a large number of cigarettes added with atomizing agent are easy to absorb moisture, resulting in yellow spots, and tries to prolong the shelf life of cigarettes while improving the smoking effect of cigarettes. China patent document with publication number of CN112493528A discloses a composite functional tobacco sheet with a core-shell structure, where the core is a tobacco sheet, and the shell is at least one barrier functional material with structural formula (

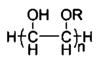

) presented by Formula 1; wherein the n is an integer not less than 2.

Although the traditional technical solutions provide some moisture-proof ideas for different sheets, however, the moisture absorption rate during the production of heated cigarettes by traditional technical solutions of heated cigarette sheets is too fast, so it is difficult to successfully process qualified heated cigarettes under the condition that the ambient humidity is greater than 45% to 70%, at the same time, it is also difficult to solve the problems such as yellow spots and mildew that may be caused during the storage of heated cigarettes. In addition, it is difficult for the traditional technical solutions to give consideration to the effects of moisture-proof and uniform release of the atomizing agent.

The above information disclosed in the background of the present disclosure is only for understanding the background of the concept of the present disclosure, and may comprise information that does not constitute a traditional technical solution.

## SUMMARY

In view of the problems of the existing sheets, especially the problems of the thick-paste-method sheets, including susceptibility to moisture absorption, yellow spots, uneven smoke release, unsatisfactory smoking taste, and need low humidity in the preparation stage of the sheets, which easily leads to equipment blockage and shutdown, the first purpose of the present disclosure is to provide a method for preparing the adhesive paste @ tobacco powder composite material. This method aims to produce an adhesive paste @ tobacco powder composite material having many advantages, such as high loading rate, low moisture absorption, uniform atomization, rich smoking flavor, and the ability to be assembled into tobacco products under ambient humidity conditions.

The second purpose of the present disclosure is to provide an adhesive paste @ tobacco powder composite material prepared by the described preparation method and the preparation application of the adhesive paste @ tobacco powder composite material in sheets, especially thick-paste-method sheets.

A third purpose of the present disclosure is to provide a thick-paste-method thin sheet comprising the adhesive paste @ tobacco powder composite material and a new tobacco product.

In the preparation process of the existing sheets for heated cigarettes, it is inevitable that more than 5% to 20% atomizing agent, which has good hygroscopicity, is used, which in turn is easy to cause moisture absorption and yellow spots in the production process and storage process. Especially for the thick-paste-method sheets, a large amount of solvent water needs to be introduced in the production process, which will increase the subsequent moisture-proof difficulty to a certain extent. In addition, in order to avoid the moisture absorption problem of the atomizing agent, there are some encapsulation means in the prior art, however, these means, while achieving moisture-proof effects, inevitably affect the release of the atomizing agent, making it difficult to give consideration to the effects of moisture-proof and release of the atomizing agent. To address the above-mentioned problem, the present disclosure provides the following solutions:

A method for preparing adhesive paste @ tobacco powder composite material, which comprises: performing first-stage coating on an atomizing agent and an inorganic material in an adhesive paste preparation tank to prepare an adhesive paste; then mixing the adhesive paste with a hydrophobic agent to realize second-stage coating; and then performing third-stage coating on the adhesive paste obtained by the second-stage coating and the tobacco powder in a trough mixer to prepare the adhesive paste @ tobacco powder composite material;

the inorganic material is a material having at least one porous structure of nano-pore, meso-pore and macro-pore and has a D50 particle size of 50 mesh to 300 mesh, and the tobacco powder has a D50 particle size of 100 mesh to 300 mesh.

The smoking materials of existing heated cigarette added with a large proportion of atomizing agent need to be processed under low humidity conditions, and the cost requirements are relatively high, and it is difficult to effectively solve the problems of moisture-proof and yellow spots prevention. Aiming at the technical problems faced by this idea, in the present disclosure, first-stage coating on an atomizing agent and an inorganic material is performed in advance by innovatively adopting a adhesive paste preparation tank, and then second-stage coating is performed on the surface of the adhesive paste obtained by the second-stage coating and the opening of the inorganic materials by using a hydrophobic agent to form hydrophobic adhesive paste. Then, the tobacco powder is coated and blocked on the surface of the hydrophobic adhesive paste by means of a trough mixer, and the joint control of the idea of the three-stage coating, structure and particle size are further coordinated, so that the inorganic material can be effectively filled with the atomizing agent in an anhydrous environment, and the porous structure on the surface of the adhesive paste can be effectively blocked by the tobacco powder, so that the replacement rate of the atomizing agent and water in the coating material is reduced in the thick paste preparation process, the moisture absorption rate of the finished sheet is reduced, the atomization uniformity of the heated cigarette prepared by using the material of the present disclosure and the stable release of flavor substances are improved, and the smoking taste is improved. In addition, the core of heated cigarette (smoking material) prepared by the present disclosure has loose requirements on the cigarette rolling and storage environment, and can be allowed for a humidity level not higher than 65%.

In the present disclosure, the joint control of the equipment of adhesive paste preparation tank and trough mixer, the coating idea, particle size, the modification of inorganic porous material and hydrophobic agent is the keys to realize synergistic coating, reduce the replacement rate of atomizing agent and water in the coating material, reduce the moisture absorption rate of the sheet, improve the atomization uniformity of heated cigarettes prepared with the material in the present disclosure and effective release of flavor substances, and improve the smoking taste.

In one embodiment, the atomizing agent can be a component well known in the industry suitable for new tobacco, for example, it can be a substance generating smoke at a temperature of 150°C to 250°C; including but are not limited to at least one of glycerol, propylene glycol, polyols, esters and saccharide compounds.

In one embodiment, the inorganic material is at least one of activated carbon, diatomite, sepiolite, zeolite, silica, vermiculite, aluminum foam, nickel foam, carbon foam, porous silicon carbide, porous ceramics, carbon molecular sieve and zeolite molecular sieve.

In one embodiment, the inorganic material includes a mixture of diatomite and vermiculite and a modified mixture

thereof;

In one embodiment, the weight ratio of diatomite to vermiculite in the mixture is 50-80:20-50;

In one embodiment, the modified mixture is a product obtained by mixing the mixture (including a mixture of diatomite and vermiculite) and pore-forming agent followed by gradient calcination treatment.

In one embodiment, the pore-forming agent includes but is not limited to at least one of CMC, glucose solution, proline and starch.

In one embodiment, the gradient calcination treatment comprises two stages of heat treatment plateform, wherein the first-stage heat treatment platform is performed at a temperature of 150°C to 300°C, and the second-stage heat treatment platform is performed at a temperature of 900°C to 1100°C.

In the present disclosure, the first-stage heat treatment platform can be performed for a time of 30min to 120 min, and the second-stage heat treatment platform can be performed for a time of 30 min to 90 min.

According to the research of the present disclosure, it is found that the innovative use of the combined inorganic materials in conjunction with the pretreatment of the special temperature control mechanism can unexpectedly achieve synergy and endow the materials with an interface suitable for the atomizing agent. Not only that, it is also conducive to the construction of a special graded porous structure. More importantly, the combination of the combined inorganic materials and the modification process can unexpectedly induce the atomizing agent to penetrate into the porous structure, improve its stability and load capacity, and alleviate problems such as moisture absorption rate and yellow spots.

In one embodiment, the porosity of the inorganic material is above or eaual to 10%, and can further be 50% to 90%.

In one embodiment, the weight ratio of the atomizing agent to the inorganic material is 0.1-0.5:1, and can further be 0.3-0.4:1.

In one embodiment, the first-stage coating is performed for a time of above or eaual to 10 min, which can further be 10 min to 120 min considering the treatment efficiency.

In one embodiment, the first-stage coating is performed under positive pressure.

In one embodiment, the positive pressure is above or eaual to 1.1 atm, preferably above or eaual to 1.5 atm (the atm refers to standard atmospheric pressure).

In one embodiment, the adhesive paste preparation tank comprises a tank body (1) provided with a frame-type wall-scraping stirring device, which comprises a rotating shaft (3), a rotating frame body (4) provided with a shaft hole at the top and rotatably connected to the rotating shaft (3) through the shaft hole, a plurality of stirring rods (5) radially installed on the rotating shaft and inside the rotating frame body, and a plurality of stirring scrapers (2) arranged on the outside of the rotating frame body (4); the adhesive paste preparation tank further comprises: a first motor (6) connected to a rotating shaft at the output end, a second motor (12) connected to the rotating frame body through a bevel gear at the output end, and a main controller (13), wherein the tank body is provided with a temperature control device (9), and the first motor, the second motor and the temperature control device are all electrically connected to the main controller.

In the present disclosure, the adhesive paste preparation tank is innovatively used to make the atomizing agent permeate and fill into the porous structure of inorganic materials, which can solve the problems of difficult filling and unsatisfactory filling stability caused by the unsatisfactory interface compatibility between the atomizing agent and inorganic materials, and further help to improve the moisture-proof of composite materials and the release effect and uniformity of the atomizing agent.

In one embodiment, the temperature control device (9) in the adhesive paste preparation tank comprises: a thermal insulation shell, hot water pipelines arranged in the thermal insulation shell, and temperature sensors arranged in the thermal insulation shell and the tank body (1) and electrically connected to the main controller.

In one embodiment, a dispersion turntable (7) is fixedly connected to the bottom end of the rotating shaft and has a plurality of teeth alternately distributed up and down around the despersion turntable.

In one embodiment, the tank body has a cover body (8) fixedly connected with a view lamp, a vacuum mirror with a scraper, a CIP cleaning head and a vacuum pressure gauge.

In one embodiment, it further comprises a lifting platform (10) connected to an electric push rod (11) at the bottom, wherein the electric push rod is electrically connected to the main controller, the motor is fixedly connected to the lifting platform, and the cover body is fixedly connected with the lifting platform; when the lifting platform rises and falls, the motor, the frame-type wall-scraping stirring device and the cover body rise and fall together with the lifting platform.

In one embodiment, the tank body (1) has a three-layer structure, and the innermost layer of the tank body is made of stainless steel.

In one embodiment, the innermost layer of the tank body (1) is subjected to mirror polishing treatment.

In the present disclosure, the second-stage coating is performed on the adhesive paste obtained by first-stage coating with a hydrophobic agent. The hydrophobic agent is at least one of glycidyl methacrylate and organopolysiloxane.

In one embodiment, the weight ratio of the adhesive paste to the hydrophobic agent is 1:0.1-0.8, which can further be 1:0.1-0.3, and can further be 1:0.15-0.25 considering the cost and effect.

In one embodiment, the third-stage coating is performed by compounding with tobacco powder after the second-stage coating.

In one embodiment, the tobacco powder has a particle size of 200 mesh to 500 mesh. In junction with the combination of the process and equipment, it is beneficial to the blocking of the surface of the adhesive paste.

In one embodiment, the raw material of the tobacco powder at least comprises a tobacco raw material, and the tobacco raw material comprises at least one of tobacco leaves, tobacco stems, fragments and tobacco fine powder.

In one embodiment, the raw material of the tobacco powder also comprises auxiliary plant components, which preferably includes but are not limited to at least one of tea leaves, clove leaves, mint leaves and roses.

In one embodiment, the tobacco powder is obtained by crushing and grinding the raw materials at a temperature below or equal to 50°C.

In one embodiment, the tobacco powder is transported by air or by belt or screw.

In one embodiment, the weight ratio of the adhesive paste obtained by the second-stage coating to the tobacco powder is 1: 1-20, and can further be 1:4-6.

In one embodiment, the trough mixer comprises a base (14) fixedly connected with a first motor (15), a fixed pillar (24) and a second motor; the output end of the first motor (15) is connected to a stirring rod (19), which is rotatably connected to a mixing trough body (22) and provided with stirring blades on the shaft in the mixing trough body (22), the other end of the stirring rod (19) is rotatably connected to the fixed pillar (24), one side of the mixing trough body (22) is fixedly connected with a first gear (25), the output end of the second motor is connected with a second gear (26), the first gear (25) is in transmission connection with the second gear (26), and at least one feed pipe (29) is arranged at the inner top of the mixing trough body, the feed pipe is provided with multiple feed holes, and the adhesive paste enters the mixing trough body (22) through the feed holes.

In one embodiment, the tobacco powder is coated on the surface of the adhesive paste with the aid of the trough mixer, so that the blocking effect of the surface pore channels is improved, and in addition, it is also made into a material which is beneficial to the preparation of thick-paste-method sheets.

In one embodiment, in the trough mixer, the first motor (15) and the stirring rod (19) are connected through a first reducer (16).

In one embodiment, the second motor and the second gear (26) are connected through a second reducer (27); in one embodiment, both ends of the mixing trough body (22) are provided with a through hole for the stirring rod (19) to pass through, a bearing seat (17) is fixedly connected in the through hole, a bearing is matched and installed in the bearing seat (17), and the stirring rod (19) is rotatably installed through the bearing.

In one embodiment, the top of the opening of the mixing trough body (22) is provided with a top cover (21).

In one embodiment, it further comprises a first bracket (18) and a second bracket (23), and two ends of the top cover (21) are fixedly installed on the first bracket (18) and the second bracket (23) respectively.

In one embodiment, it further comprises a sealing rubber strip (20) arranged at the contact position of the top cover (21) and the mixing trough body (22) after being covered.

In one embodiment, the top cover (21) is provided with an inlet of tobacco powder.

In one embodiment, the diameter of the feed hole is selected to be 0.5 mm to 3 mm.

In one embodiment, the D50 particle size of the adhesive paste @ tobacco powder composite material is 50 mesh to 300 mesh.

In one embodiment, the time of each stage coating is not particularly required, for example, it can be above or equal to 10 min, and can further be 10 min to 120 min considering the treatment efficiency.

In one embodiment, the temperature and humidity of each stage coating are not particularly required, and it can be conventional ambient temperature and humidity, and further, the temperature can be 10°C to 45°C. The humidity can be relaxed to 60%.

The present disclosure also provides an adhesive paste @ tobacco powder composite material prepared by the preparation method.

In the present disclosure, thanks to the preparation method, a composite material with special results can be obtained, and the composite material can unexpectedly give consideration to excellent moisture-proof performance and release effect of the atomizing agent.

The present disclosure further provides use of the adhesive paste @ tobacco powder composite material prepared by the preparation method in preparing tobacco sheets of a new tobacco, and further preferably in preparing thick-paste-method sheets.

The present disclosure further provides a tobacco sheet of a new tobacco product comprising the adhesive paste @ tobacco powder composite material prepared by the preparation method, and preferably a thick-paste-method sheet. The tobacco sheet can be a sheet made by any preparation method and comprising the adhesive paste @ tobacco powder composite material. Considering the excellent moisture-proof and uniform release advantages of the smoking agent, it is especially suitable for thick-paste-method sheets, which can bring better application value.

A new tobacco product, which comprises an adhesive paste @ tobacco powder composite material prepared by the preparation method described in the present disclosure and a tobacco sheet comprising the adhesive paste @ tobacco

powder composite material.

The preferred new tobacco product is a heated non-burning cigarette, in which the heated section is added with the thick paste sheet. The present disclosure further provides a heated non- burning new tobacco, and the thick paste sheet is added to the heated section.

A method for preparing the new tobacco product is also provided by the present disclosure, which can comprise rolling the thick paste sheet of the present disclosure based on the known equipment and methods.

In one embodiment, the humidity during the preparation process is 45% to 70%, and can further be 60±5%.

In the present disclosure, thanks to the excellent performance of the composite material, compared with the existing conventional sheets, the humidity during the preparation of tobacco products prepared by the formed sheets can be relaxed to 45% to 70% ambient humidity. However, the humidity during the preparation of cigarettes prepared by the existing conventional sheets usually needs to be controlled below or equal to 45%.

A method for preparing an adhesive paste @ tobacco powder composite material is provided by the present disclosure, which can reduce the replacement of atomizing agent and water, reduce the moisture absorption rate of the prepared smoking material, eliminate the generation of yellow-spot cigarettes, and in addition, improve the atomization load rate. The atomization uniformity and the release effect of flavor substances are improved, and the taste of smoke evaluation is improved.

In the present disclosure, the special combined inorganic material of diatomite and vermiculite and its special calcination process are used to pretreat the modified mixture with the cooperation of pore-forming agent, and the first-stage coating and other improvement processes are combined under the pressure condition (positive pressure condition), which can be further jointly controlled with the equipment and material structure of the present disclosure, which is helpful to further improve the loading rate of atomizing agent, reduce the replacement of atomizing agent and water, reduce the moisture absorption rate of the prepared smoking material, eliminate the generation of yellow-spot cigarettes, and improve the atomization uniformity and the smoking taste.

The core of the heated cigarette (smoking material) prepared by the present disclosure has relaxed requirements in cigarette rolling and storage environment, can be relaxed to a humidity level not higher than 65%, has lower production process cost, and has better atomization uniformity and smoking taste of the produced sheet.

## BRIEF DESCRIPTION OF THE DRAWINGS

For clearer illustration of the technical solutions according to embodiments of the present disclosure or conventional techniques, hereinafter briefly described are the drawings to be applied in embodiments or conventional techniques. Apparently, the drawings in the following descriptions are only some embodiments of the present disclosure, and other drawings may be obtained by those skilled in the art based on these drawings without creative efforts.

FIG. 1 is a schematic front view of an adhesive paste preparation tank of the present disclosure.

FIG. 2 is a schematic side view of the lifting platform of the adhesive paste preparation tank after it is lifted.

FIG. 3 is a schematic top view of the adhesive paste preparation tank.

FIG. 4 is a front view of a trough mixer for uniformly mixing the adhesive paste and the tobacco powder.

FIG. 5 is a side view of the mixing trough body of the trough mixer for uniformly mixing adhesive paste and tobacco powder after rotation.

Reference numerals:

1, tank body; 2, mixing scraper; 3, rotating shaft; 4, frame body; 5, stirring rod; 6, first motor; 7, dispersed turntable; 8, cover body; 9, temperature control device; 10, lifting platform; 11, electric push rod; 12, second motor; 13, main controller; 14, base; 15, first motor; 16, first reducer; 17, bearing seat; 18, first bracket; 19, mixing rod; 20, sealing rubber strip; 21, top cover; 22, mixing trough body; 23, second bracket; 24, fixed pillar; 25, first gear; 26, second gear; 27, second reducer; 28, second motor; 29, feed pipe.

## DETAILED DESCRIPTION

The solutions in the embodiments of the present disclosure will be described clearly and completely hereinafter in conjunction with the drawings in the embodiments of the present disclosure. It is apparent that the described embodiments are only a part of the embodiments of the present disclosure rather than all of the embodiments. Based on the

embodiments of the present disclosure, all other embodiments obtained by those skilled in the art without any creative work fall into the protection scope of the present disclosure.

As shown in FIG. 1 to FIG. 3, disclosed is an adhesive paste preparation tank, which comprises a tank body 1 provided with a frame-type wall-scraping stirring device, which comprises a rotating shaft 3, a rotating frame body 4 provided with a shaft hole at the top and rotatably connected to the rotating shaft 3 through the shaft hole, a plurality of stirring rods 5 radially installed on the rotating shaft 3 and inside the rotating frame body 4, and a plurality of stirring scrapers 2 arranged on the outside of the rotating frame body 4; the adhesive paste preparation tank further comprises: a first motor 6 connected to a rotating shaft 3 at the output end, a second motor 12 connected to the rotating frame body 4 through a bevel gear at the output end, and a main controller 13 electrically connected to the first motors 6, the second motor 12 and a temperature control device arranged in the tank body 1. Specifically, the main controller has a stepless frequency conversion governor, and the rotation peed of the first motor and the second motor can be changed by the stepless frequency conversion governor, to adjust the stirring impact force, and it can be adjusted at will within the range of 0 rpm to 60 rpm. The material can naturally roll in the pot body to eliminate the dead angle, so that the material can get a high-quality stirring effect.

In some embodiments, the temperature control device 9 comprises: a thermal insulation shell, hot water pipelines arranged in the thermal insulation shell, and temperature sensors arranged in both of the thermal insulation shell and the tank body 1 and electrically connected to the main controller 13. The temperature in the tank body is maintained at 50°C to 60°C by means of the temperature control device, which increases the fluidity of high-viscosity adhesive paste and solves the problem of poor discharge of high-viscosity adhesive paste.

In some embodiments, a dispersion turntable 7 is fixedly connected to the bottom end of the rotating shaft and there are a plurality of teeth alternately distributed up and down around the dispersion turntable. The material at the bottom of the tank can be further dispersed by the dispersion turntable with teeth, and the stirring effect is improved.

In some embodiments, the tank body has a cover body 8 fixedly connected with a view lamp, a vacuum mirror with a scraper, a CIP cleaning head and a vacuum pressure gauge. Specifically, when the view lamp is turned on, the state inside the tank body can be seen through the vacuum mirror with scraper, and the scraper can scrape off the materials attached to the vacuum mirror to avoid blocking the line of sight. The CIP cleaning system belongs to the prior art, and the CIP cleaning head is connected to the cover body to facilitate the cleaning of the tank body. The vacuum pressure gauge is used to detect the pressure value in the tank body. The cover body is provided with a feed port, and the feed is done through a vacuum feed pipe. The bottom of the tank body is provided with a discharge port, and the size of the discharge port can be selected according to actual requirements, in this embodiment, the diameter of the discharge port is 51 mm, which is beneficial to discharging materials.

In some embodiments, it further comprises a lifting platform 10 connected to an electric push rod 11 at the bottom, wherein the electric push rod is electrically connected to the main controller, the motor is fixedly connected to the lifting platform, and the cover body is fixedly connected to the lifting platform; when the lifting platform rises and falls, the motor, the frame scraping stirring device and the cover body rise and fall together with the lifting platform. The cover body is opened by means of the lifting platform, which is convenient for cleaning the residual materials.

In some embodiments, the tank body 1 has a three-layer structure, the innermost layer of the tank body is made of stainless steel, and the innermost layer of the tank body 1 is subjected to mirror polishing treatment. Specifically, the tank with multi-layer structure has better heat insulation effect, and the stainless steel is subjected to mirror polishing treatment to reach the sanitary level of 300 EMSH, so as to avoid polluting the materials in the tank. PU polyurethane foaming process is used for the outer insulation layer of tank to reduce energy consumption.

In the present disclosure, the rotation of the frame-type wall-scraping stiring device is done by the first motor and the second motor, and the stepless speed change of the motor is realized by the stepless frequency conversion speed governor of the main controller to fully stir, and a plurality of radially arranged stirring rods can improve the uniformity of stirring and mixing. The dispersion turntable arranged at the bottom of the rotating shaft can make the material at the bottom disperse more evenly. The temperature in the tank body is maintained at 50°C to 60°C by the temperature control device, which increases the fluidity of high-viscosity adhesive paste and solves the problem of poor discharge of high-viscosity adhesive paste. The cover body can be opened automatically through the lifting platform, which is convenient for cleaning the residual materials in the tank body. In the present disclosure, the paste preparation tank enables the atomizing agent to achieve good infiltration and porous structure penetration of inorganic materials without water.

As shown in FIG. 4 and FIG. 5, disclosed is a trough mixer for uniformly mixing adhesive paste and tobacco powder, which comprises a base 14 fixedly connected with a first motor 15, a fixed pillar 24 and a second motor. The output end of the first motor 15 is connected to a stirring rod 19, which is rotatably connected with a mixing trough body 22 and provided with stirring blades on the shaft in the mixing trough body 22, the other end of the stirring rod 19 is rotatably connected to the fixed pillar 24, one side of the mixing trough body 22 is fixedly connected with a first gear 25, the output end of the second motor is connected with a second gear 26, and the first gear 25 is in transmission connection with the second gear 26. The number of teeth of the first gear 25 is greater than that of the second gear 26, so that a larger transmission torque can be obtained, which is more conducive to rotating the mixing trough body 22.

At least one feed pipe 29 is arranged at the inner top of the mixing trough body, the feed pipe is provided with a plurality of feed holes, and the paste enters the mixing trough body 22 through the feed holes. Under the action of external extrusion, the paste enters the mixing trough body from the feed holes of the feed pipe. Squeezing paste can be achieved by using an electric push rod to push the piston to squeeze, or by other methods equivalent to it. The diameter of the feed holes is selected to be 0.5 mm to 3 mm, and the adhesive paste flows out in a filament shape after being extruded, which is convenient for being evenly mixed with the tobacco powder.

In some embodiments, the first motor 15 and the stirring rod 19 are connected through a first reducer 16, and the second motor and the second gear 26 are connected through a second reducer 27. Specifically, by selecting the appropriate first reducer 16 and second reducer 27, and controlling the transmission ratio and transmission torque, and a better mixing effect is achieved. Wherein, the stepping motor or servo motor, which is selected as the second motor, can better control the tilting angle of the mixing trough body 22.

In some embodiments, both ends of the mixing trough body 22 are provided with a through hole for the stirring rod 19 to pass through, and a bearing seat 17 is fixedly connected in the through hole, and a bearing is matched and installed in the bearing seat 17, and the stirring rod 19 is rotatably installed through the bearing. Specifically, the bearing seat 17 is fixed at the through hole at both ends of the mixing trough body 22 by bolts, a bearing is installed in the bearing seat 17, and the stirring rod 19 passes through the bearing at both ends for assembly and can rotate in the mixing trough body 22 for stirring and mixing.

In some embodiments, the top of the opening of the mixing trough body 22 is provided with a top cover 21. It further comprises a first bracket 18 and a second bracket 23. Both ends of the top cover 21 are fixedly installed on the first bracket 18 and the second bracket 23 respectively. The top cover 21 is provided with an inlet for tobacco powder, and it further comprises a sealing rubber strip 20, which is arranged at the contact position of the top cover 21 and the mixing trough body 22 after being covered. Specifically, the materials to be mixed are put into the mixing trough body 22 through the feed port on the top cover 21, and the top cover 21 plays a sealing role during the stirring with the stirring rod 19 to prevent the internal materials from overflowing. The top cover 21 is fixedly installed by the first bracket 18 and the second bracket 23. When it is necessary to rotate the mixing trough body 22 and pour out the materials therein, the top cover 21 will not move together with the mixing trough body 22.

In summary, in the present disclosure, by using the trough mixer, the materials in the mixing trough body are mixed and stirred by driving the stirring rod using the first motor, and after the material mixing is completed, the materials are poured out by driving the mixing trough body to rotate using the second motor, and the whole mixing processing process does not need manual intervention, so that the working efficiency is effectively improved, and at the same time, potential safety hazards caused by manual operation are avoided. On the other hand, the diameter of the adhesive paste entering the mixing trough body through the feed holes is small, and it is more uniform after mixing with the tobacco powder, which is also beneficial to the effective blocking of the porous structure on the surface of the adhesive paste by the tobacco powder.

In the present disclosure, when forming thick paste, the adhesive used can be a conventional binder in the industry. For example, as an illustrative example, the adhesive is prepared as follow: weighing 18 kg of sucrose fiber and 450 kg of water, placed in a high-speed hydraulic defibrator for defibration for 80 min, and stirring at a speed of 5000 rpm. 3 kg of guar gum, 1 kg of xanthan gum and 5 kg of glycerol are put into the liquid in the above-mentioned hydraulic defibrator in sequence, and continuously stirred at the speed of 5000 rpm for 30 min for later use (binder).

The weight ratio of the adhesive paste @ tobacco powder particles to the binder can be 1:3-10, can further be 1:4-6.

In the present disclosure, the method for preparing the thick-paste-method sheet can be conventional, for example, the binder and the adhesive paste @ tobacco powder particles can be uniformly mixed to form thick paste, and then the paste is distributed, dried and peeled off based on conventional means, to form the sheet.

In the present disclosure, the humidity in the preparation process is based on excellent tolerance and the preparation process can be performed under any ambient humidity condition.

**Example 1**

Step (1): first-stage coating

3,000 g of inorganic material (diatomite, D50 of 200 mesh) and 1,000 g of atomizing agent (glycerin) were stirred and coated in an adhesive paste preparation tank, wherein the stirring was kept for 20 min to 30 min, the stirring rotor was controlled at a speed of 1,200 rpm, and the temperature of the stirring tank was controlled at 50°C±5°C, and after the process requirements were met, the mixture 1 (adhesive paste) was obtained and was ready for use.

Step (2): second-stage coating

Glycidyl methacrylate (0.2 times the weight of the adhesive paste) was added into the adhesive paste in step 1, and mixed for the second-stage coating (20 min to 30 min) to prepare a modified adhesive paste;

Step (3): third-stage coating

Tobacco powder raw materials (tobacco leaves, tobacco stems and tea leaves with a weight ratio of 6:3:1) were crushed at a temperature lower than 50°C to obtain tobacco powder with a particle size of 200 mesh to 500 mesh.

The modified adhesive paste and tobacco powder were mixed in a trough mixer in a weight ratio of 1:5 (time was 20 min to 30 min) to obtain adhesive paste @ tobacco powder particles.

Step (4): preparation of conventional thick paste and sheets

The prepared adhesive paste @ tobacco powder particles were evenly mixed with adhesive (weight ratio of 1:4), the thick-paste-method sheet for heated cigarettes was produced according to the manufacturing process of thick-paste-method sheet.

The thick-paste-method sheets produced by this method were cut into shreds and then rolled into heated cigarettes (this process was achieved based on known technology and equipment, but the difference was that the production humidity in the preparation stage of heated cigarettes such as shredding and rolling was relaxed to 60±5%), which could effectively prevent the quality defects of sheets or heated cigarettes such as moisture absorption, agglomeration, material blockage and water wet lump. In addition, there was no blocking of the rolling machine in the preparation process.

Comparative example 1

Compared with Example 1, steps 1 to 3 were combined into a mixing process, specifically, inorganic materials, atomizing agent, glycidyl methacrylate and tobacco powder were mixed together (the total mixing time was 1.5 h) to obtain composite materials, and the composite materials were treated in Step 4 instead of the adhesive paste @ tobacco powder particles in Example 1 to obtain thick paste and sheets.

Example 2:

Compared with Example 1, the only difference was that the inorganic materials were changed, and other operations and parameters were the same as Example 1. The experimental groups were as follows:

A: the inorganic material was vermiculite (D50 of 200 mesh)

B: the inorganic materials were diatomite (D50 of 200 mesh) and vermiculite (D50 of 200 mesh) with a weight ratio of 1:1; the amount of total inorganic materials was the same as that in Example 1.

C: the inorganic material was a modified material and was prepared as follows: 2000 g of diatomite (D50 of 200 mesh), 1000 g of vermiculite (D50 of 200 mesh) and 1000 g of starch were treated according to the following programmed heating process.

$$20^{\circ}C \xrightarrow{40\,\text{min}} 200^{\circ}C \xrightarrow{30\,\text{min}} 200^{\circ}C \xrightarrow{80\,\text{min}} 1000^{\circ}C \xrightarrow{60\,\text{min}} 1000^{\circ}C \xrightarrow{\text{natural cooling}} \text{room temperature}$$

**Example** 3:

Compared with Example 1, the only difference was that in Step 1, the atomizing agent and inorganic materials were coated by stirring at 1.5 atmospheric pressure.

**Comparative example 2**

Compared with Example 1, the only difference was that step 2 was omitted, and other operations and parameters were the same as Example 1.

**Comparative example 3**

Compared with Example 1, the conventional thick paste preparation process was adopted, and the only difference was that steps 1 to 3 were omitted, but the inorganic materials, atomizing agent and glycidyl methacrylate used in these steps were directly mixed with the adhesive in step 4 to form thick paste and sheets.

**Comparative example 4**

Compared with Example 1, the only difference was that step 3 was directly performed after step 1, and then step 2 was performed, and then step 4 was performed. Other operations and parameters were the same as in Example 1.

**Example 4**

Compared with Example 1, the difference was that in Step 1, the inorganic material was activated carbon. The atomizing agent was glycerol. The weight ratio of the atomizing agent to the inorganic material was 0.4:1;
in step 2, the hydrophobic agent was organopolysiloxane, and the weight ratio of the adhesive paste to the hydrophobic agent was 1:0.15.
In step 3, the weight ratio of the second coated paste to the tobacco powder was 1:4.
Other operations and parameters were the same as in Example 1.

**Example 5**

Compared with Example 1, the difference was that in Step 1, the inorganic material was porous ceramics. The atomizing agent was glycerol. The weight ratio of the atomizing agent to the inorganic material was 0.3:1;
in step 2, the hydrophobic agent was organopolysiloxane, and the weight ratio of the adhesive paste to the hydrophobic agent was 1:0.25.
In step 3, the weight ratio of the second coated paste to the tobacco powder was 1:6.
Other operations and parameters were the same as in Example 1.

**Example 6**

Compared with Example 1, the only difference was that in Step 4, the paper-making method was used for sheet production. The mixture (adhesive paste @ tobacco powder particles) treated in Step 1, Step 2 and Step 3 was mixed with the coating liquid (binder) in a ratio of 1:2, and coated on the substrate according to the production process of paper-making sheet, dried and sliced, and then cut into shreds and made into heated cigarettes.

**Example 7**

Compared with Example 1, the only difference was that in step 4, the roll pressing method was used for sheet production. Firstly, 18 kg of sucrose fiber and 120 kg of water were weighed out and put into a high-speed hydraulic defibrinator for defibrination for 60 min, with a stirring speed of 5000 rpm. 3 kg of guar gum, 1 kg of xanthan gum and 5 kg of glycerol were put into the liquid in the above-mentioned hydraulic defibrator in sequence, and continuously stirred at a speed of 5000 rpm for 30 min for later use (binder). The mixture (adhesive paste @ tobacco powder particles) treated in step 1, step 2 and step 3 was mixed in a ratio of 1:1. According to the rolling process, it was made into roll-press-method sheets for heated cigarettes, dried, shredded, and made into the heated cigarettes.

**Example 8**

Compared with Example 1, the only difference was that in step 4, the substrate coating method was used for sheet production, and the mixture (adhesive paste @ tobacco powder particles) treated in step 1, step 2 and step 3 was mixed with coating liquid (binder) in a ratio of 1:1 to form a spraying slurry, and the above-mentioned coating paste was coated on the substrate (which can be a paper-making-method tobacco sheet or a plant fiber substrate made of other fibers), and then dried, sliced, shredded and made into the heated cigarettes.

**Example 9**

Compared with Example 1, the only difference was that in step 4, the dry method was used for sheet production. The mixture (adhesive paste @ tobacco powder particles) treated in step 1, step 2 and step 3 was mixed with binder in a

ratio of 1:5 to form a spraying slurry. The above-mentioned spraying paste was sprayed repeatedly on a substrate pre-manufactured by a similar non-woven fabric production process by nozzles for six times, and then dried, sliced, shredded and made into the heated cigarettes.

**Example 10**

Compared with Example 1, the only difference was that in step 4, the extrusion molding method was used for sheet production. Firstly, 15 kg of sucrose fiber and 100 kg of water were weighed and put into a high-speed hydraulic defibrinator for defibrination for 60 min, with a stirring speed of 5000 rpm. 3 kg of guar gum, 1 kg of xanthan gum and 1 kg of locust bean gum were put into the liquid in the above-mentioned hydraulic defiberator in sequence, and continuously stirred at a speed of 5000 rpm for 30 minutes for later use (binder). The mixture (adhesive paste @ tobacco powder particles) treated in step 1, step 2 and step 3 was mixed in a ratio of 1:1. According to the extrusion molding process, it was made into sheets for heated cigarettes, dried, shredded and made into heated cigarettes.

The smoking method of heated cigarettes was performed according to the conventional methods in the industry. For example, the heating working temperature of the heating appliance in the smoking stage was 220°C±5°C.

The release uniformity of the atomizing agents of glycerol 1 to 7 puffs detected as well as the 24 h weight gain data under the humidity of 45-60±3% in the examples and comparative examples, are shown in Table 2.

Table 2

| Samples | Glycerol | | | Cambridge filter trapping amount | | | Net increase percentage of moisture content of the samples at the humidity of 45 ±3%/24h | Net increase percentage of moisture content of the samples at the humidity of 6013%/24h |
|---|---|---|---|---|---|---|---|---|
| | RSD (%) | R | STD | RSD (%) | R | STD | | |
| Example 1 | 8.93 | 0.07 | 0.03 | 11.87 | 0.80 | 0.26 | 1.1 | 1.8 |
| Comparative example 1 | 15.10 | 0.31 | 0.10 | 25.34 | 1.38 | 0.42 | 3.4 | 5.1 |
| Example 2A | 9.73 | 0.12 | 0.05 | 11.77 | 0.70 | 0.21 | 1.2 | 1.9 |
| Example 2B | 7.38 | 0.10 | 0.04 | 10.23 | 0.56 | 0.15 | 1.1 | 1.7 |
| Example 2C | 5.19 | 0.06 | 0.03 | 7.56 | 0.34 | 0.10 | 0.8 | 1.3 |
| Example 3 | 8.38 | 0.14 | 0.05 | 12.23 | 0.62 | 0.14 | 1.0 | 1.5 |
| Example 4 | 8.73 | 0.11 | 0.04 | 10.66 | 0.64 | 0.18 | 1.5 | 2.1 |
| Example 5 | 9.13 | 0.12 | 0.05 | 11.05 | 0.68 | 0.20 | 1.4 | 2.0 |
| Example 6 | 10.25 | 0.14 | 0.06 | 12.15 | 0.70 | 0.21 | 1.5 | 2.3 |
| Example 7 | 8.83 | 0.07 | 0.03 | 11.97 | 0.75 | 0.30 | 1.1 | 2.1 |
| Comparative example 2 | 19.10 | 0.35 | 0.11 | 28.36 | 1.88 | 0.62 | 3.6 | 6.0 |
| Comparative example 3 | 25.06 | 0.38 | 0.14 | 33.42 | 2.28 | 0.70 | 6.6 | 8.5 |
| Comparative example 4 | 12.10 | 0.25 | 0.09 | 24.25 | 1.10 | 0.34 | 2.5 | 4.4 |

In summary, in the present disclosure, the moisture-proof effect can be effectively improved, and even under the condition of high humidity, it can show excellent moisture-proof effect. In addition, it will not sacrifice the release effect of the atomizing agent for moisture-proof effect, but it can improve the release amount and release uniformity of the atomizing agent of the sheet to a certain extent. Moreover, the preparation process of the present disclosure has relaxed conditions, and can tolerate high-humidity preparation conditions, for example, it can be unexpectedly rolled to form cigarettes at high ambient humidity (about 60%). In addition, it can also be applied to different sheet preparation processes, and the process conditions are easy to realize and the process universality is good.

In the description of the present disclosure, it need to be understood that if the terms "first" and "second" appear, these terms are merely used for the sake of description, and can not be understood as indicating or implying relative importance or implicitly indicating the number of indicated technical features. Therefore, features defined with "first" and "second" may explicitly or implicitly comprise at least one of the features. In the description of the present disclosure, the

term "multiple", "plurality of" means at least two, such as two, or three, and the like, unless clearly and specific defined otherwise.

In the present disclosure, unless otherwise specified and limited, if the terms "connected" and "fixed" appear, these terms should be broadly understood. For example, "connection" may be a fixed connection, a detachable connection, or connection as an integral; "connection" may be a mechanical connection or an electrical connection; "connection" may be a direct connection, an indirect connection through an intermediate medium, or internal communication between two components or interaction relationship between two components, unless clearly limited otherwise. Those skilled in the art can understand specific meanings of the above-mentioned terms in the present disclosure based on specific situations.

Technical features in the above-mentioned examples may be arbitrarily combined. Herein not all possible combinations of the technical features in the above-mentioned examples are illustrated for the sake of clarity and conciseness. However, these combinations of technical features should be considered to fall within the scope of the present disclosure as long as there is no conflict.

The above-mentioned examples only express several implementations of the present disclosure, and their descriptions are more specific and detailed, but they cannot be understood as limiting the scope of patent disclosure. It should be pointed out that for those skilled in the art, several modifications and improvements can be made without departing from the concept of the present disclosure, and they all fall within the protection scope of the present disclosure. Therefore, the protection scope of the present disclosure should be determined by the appended claims.

## Claims

1. A method for preparing an adhesive paste @ tobacco powder composite material, comprising:

    performing first-stage coating on an atomizing agent and an inorganic material in an adhesive paste preparation tank to prepare an adhesive paste; then
    mixing the adhesive paste with a hydrophobic agent to realize second-stage coating; and then
    performing third-stage coating on the adhesive paste obtained by the second-stage coating and the tobacco powder in a trough mixer to prepare the adhesive paste @ tobacco powder composite material;
    wherein the inorganic material is a material having at least one porous structure of nano-pore, meso-pore and macro-pore and has a D50 particle size of 50 mesh to 300 mesh, and the tobacco powder has a D50 particle size of 100 mesh to 300 mesh.

2. The method according to claim 1, wherein the atomizing agent refers to a substance capable of generating smoke at a temperature of 150°C to 250°C; including but is not limited to at least one of glycerol, propylene glycol, polyols, esters and saccharide compounds.

3. The method according to claim 1, wherein the inorganic material is at least one of activated carbon, diatomite, sepiolite, zeolite, silica, vermiculite, aluminum foam, nickel foam, carbon foam, porous silicon carbide, porous ceramics, carbon molecular sieve and zeolite molecular sieve.

4. The method according to claim 3, wherein the inorganic material includes a mixture of diatomite and vermiculite and a modified mixture thereof;

    the modified mixture is a product obtained by mixing the mixture with a pore-forming agent followed by gradient calcination treatment;
    the pore-forming agent includes but is not limited to at least one of CMC, glucose solution, proline and starch; and the gradient calcination treatment comprises two stages of heat treatment plateform, wherein the first-stage heat treatment platform is performed at a temperature of 150°C to 300°C, and the second-stage heat treatment platform is performed at a temperature of 900°C to 1100°C.

5. The method according to claim 1, wherein a weight ratio of the atomizing agent to the inorganic material is 0.1-0.5:1;

    the first-stage coating is performed under positive pressure; and
    the positive pressure is above or eaual to 1.1 atm, preferably above or eaual to 1.5 atm.

6. The method according to any one of claims 1 to 5, wherein the adhesive paste preparation tank comprises: a tank body (1) provided with a frame-type wall-scraping stirring device, which comprises a rotating shaft (3), a rotating frame body

(4) provided with a shaft hole at the top and rotatably connected to the rotating shaft (3) through the shaft hole, a plurality of stirring rods (5) radially installed on the rotating shaft and inside the rotating frame body, and a plurality of stirring scrapers (2) arranged on the outside of the rotating frame body (4); the adhesive paste preparation tank further comprises: a first motor (6) connected to a rotating shaft at the output end, a second motor (12) connected to the rotating frame body through a bevel gear at the output end, and a main controller (13) electrically connected to the first motor, the second motor and a temperature control device (9) arranged on the tank body;

the temperature control device (9) in the adhesive paste preparation tank comprises: a thermal insulation shell, hot water pipelines arranged in the thermal insulation shell, and temperature sensors arranged in the thermal insulation shell and the tank body (1) and electrically connected to the main controller;
a dispersion turntable (7) is fixedly connected to the bottom end of the rotating shaft and has a plurality of teeth alternately distributed up and down around it;
the tank body has a cover body (8) fixedly connected with a view lamp, a vacuum mirror with a scraper, a CIP cleaning head and a vacuum pressure gauge;
the adhesive paste preparation tank further comprises a lifting platform (10) connected to an electric push rod (11) at the bottom, wherein the electric push rod is electrically connected to the main controller, the motor is fixedly connected to the lifting platform, and the cover body is fixedly connected with the lifting platform; when the lifting platform rises and falls, the motor, the frame-type wall-scraping stirring device and the cover body rise and fall together with the lifting platform;
the tank body (1) has a three-layer structure, and the innermost layer of the tank body is made of stainless steel; and
the innermost layer of the tank body (1) is subjected to mirror polishing treatment.

**7.** The method according to claim 1, wherein the hydrophobic agent is at least one of glycidyl methacrylate and organopolysiloxane; and
a weight ratio of the adhesive paste to the hydrophobic agent is 1:0.1-0.8.

**8.** The method according to claim 1, wherein the tobacco powder has a particle size of 200 mesh to 500 mesh;

the raw material of the tobacco powder at least comprises a tobacco raw material, and the tobacco raw material comprises at least one of tobacco leaves, tobacco stems, fragments and tobacco fine powder;
the raw material of the tobacco powder also comprises auxiliary plant components, which preferably include but are not limited to at least one of tea leaves, clove leaves, mint leaves and roses.

**9.** The method according to claim 8, wherein the tobacco powder is obtained by crushing and grinding the raw material at a temperature below or equal to 50°C.

**10.** The method according to claim 1, 8, or 9, wherein a weight ratio of the adhesive paste obtained by the second-stage coating to the tobacco powder is 1:1-20.

**11.** The method according to claim 1, wherein the trough mixer comprises a base (14) fixedly connected with a first motor (15), a fixed pillar (24) and a second motor; the output end of the first motor (15) is connected to a stirring rod (19), which is rotatably connected to a mixing trough body (22) and provided with stirring blades on the shaft in the mixing trough body (22), the other end of the stirring rod (19) is rotatably connected to the fixed pillar (24), one side of the mixing trough body (22) is fixedly connected to a first gear (25), the output end of the second motor is connected to a second gear (26), and the first gear (25) is in transmission connection with the second gear (26), and at least one feed pipe (29) is arranged at the inner top of the mixing trough body, the feed pipe is provided with multiple feed holes, throush which the adhesive paste enters the mixing trough body (22);

in the trough mixer, the first motor (15) and the stirring rod (19) are connected through a first reducer (16);
the second motor and the second gear (26) are connected through a second reducer (27);
both ends of the mixing trough body (22) are provided with a through hole for the stirring rod (19) to pass through, a bearing seat (17) is fixedly connected in the through hole, a bearing is matched and installed in the bearing seat (17), and the stirring rod (19) is rotatably installed through the bearing;
the top of the opening of the mixing trough body (22) is provided with a top cover (21);
the trough mixer further comprises a first bracket (18) and a second bracket (23), and two ends of the top cover (21) are fixedly installed on the first bracket (18) and the second bracket (23) respectively;
the trough mixer further comprises a sealing rubber strip (20) arranged at the contact position of the top cover (21)

and the mixing trough body (22) after being covered;
the top cover (21) is provided with an inlet for tobacco powder;
the diameter of the feed hole is selected to be 0.5 mm to 3 mm.

**12.** The method according to claim 1, wherein the adhesive paste @ tobacco powder composite material has a D50 particle size of 50 mesh to 300 mesh.

**13.** An adhesive paste @ tobacco powder composite material prepared by the method according to any one of claims 1 to 12.

**14.** Use of the adhesive paste @ tobacco powder composite material prepared by the method according to any one of claims 1 to 12 for preparing a tobacco sheet of a new tobacco, and further preferably a thick-paste-method sheet.

**15.** A tobacco sheet of a new tobacco product, comprising the adhesive paste @ tobacco powder composite material prepared by the method according to any one of claims 1 to 12.

**16.** A new tobacco product comprising the adhesive paste @ tobacco powder composite material prepared by the method according to any one of claims 1 to 12;
which comprises the thick paste sheet according to claim 15.

**17.** The new tobacco product according to claim 16, which is a heated non-burning cigarette, wherein the thick paste sheet is added to a heating section.

**18.** A method for preparing the new tobacco product according to any one of claims 16 to 17, comprising rolling the thick paste sheet;
wherein the humidity during the preparation process is 45% to 70%.

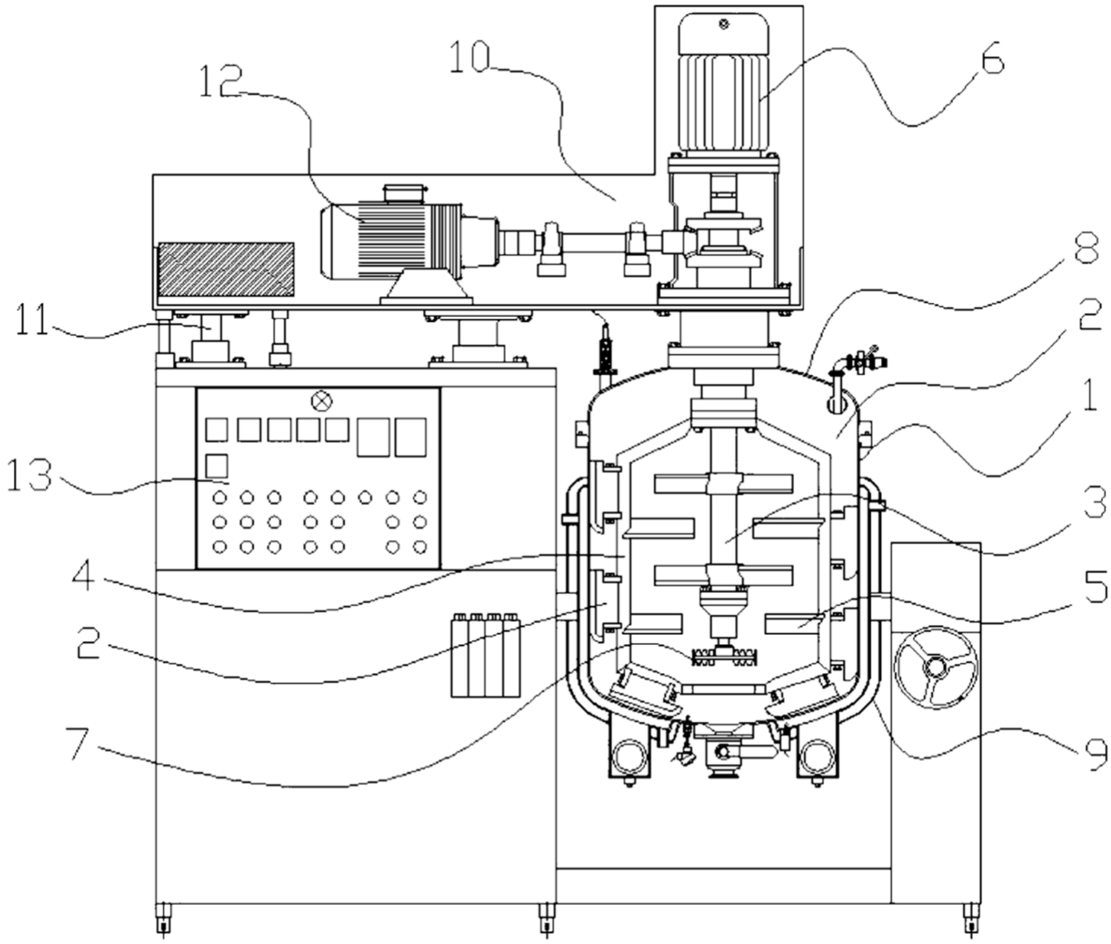


FIG. 1

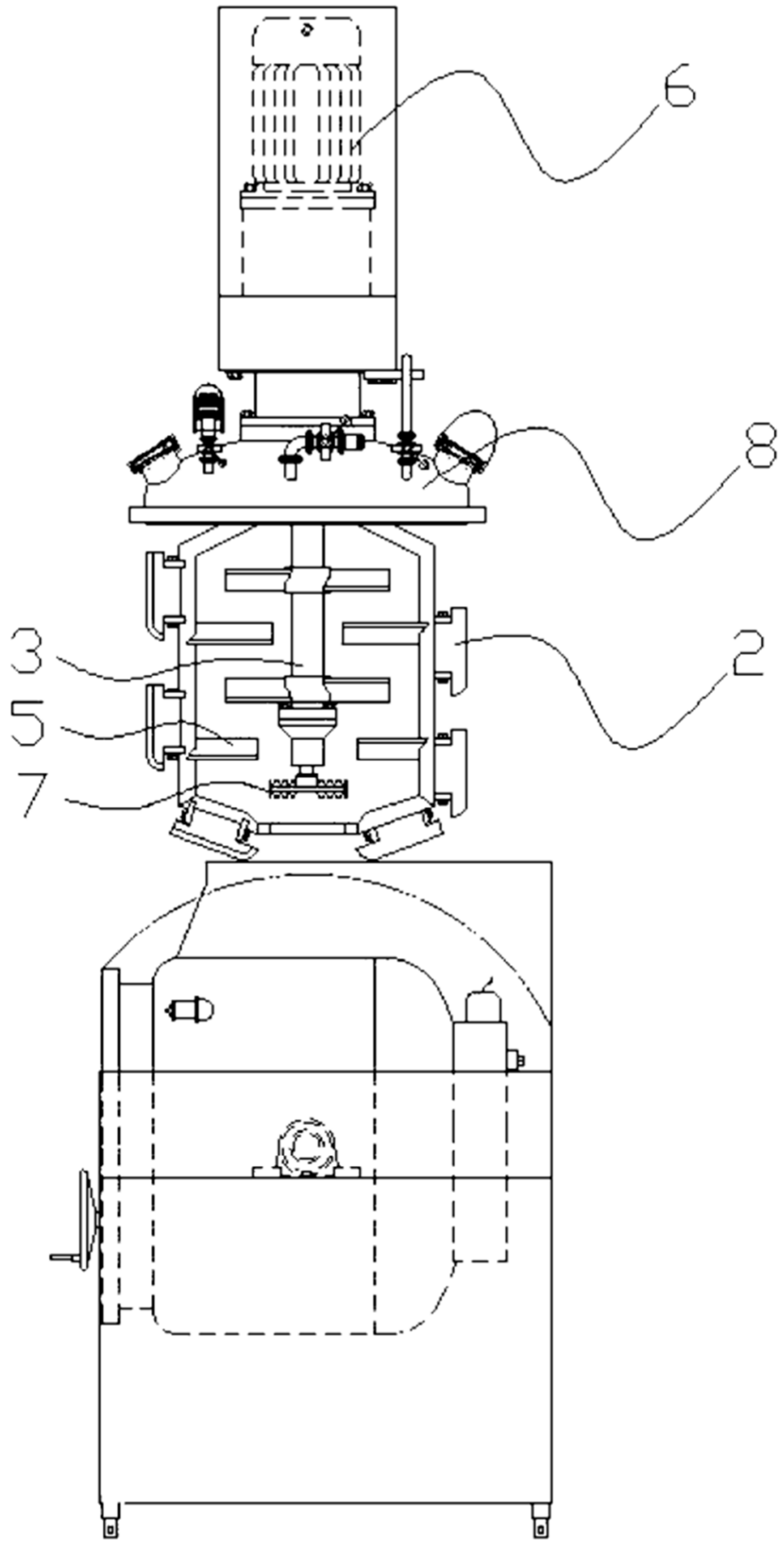


FIG. 2

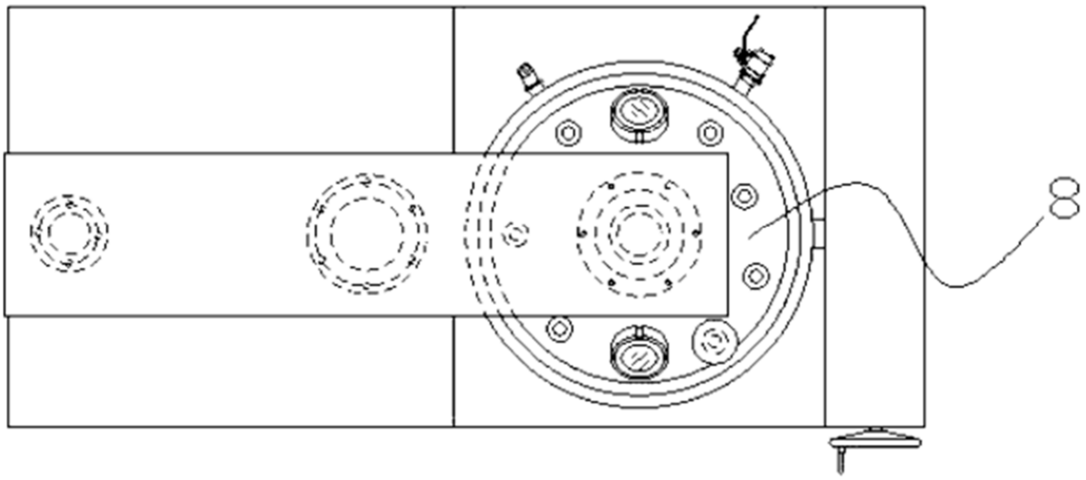


FIG. 3

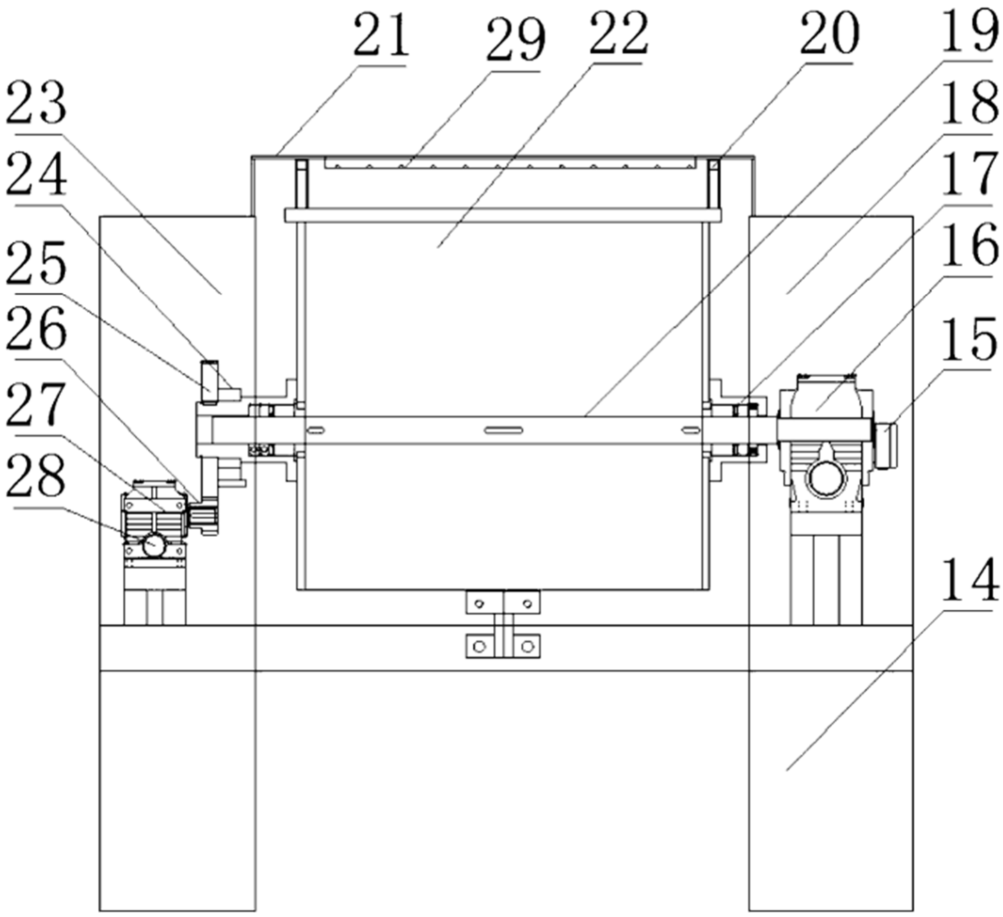


FIG. 4

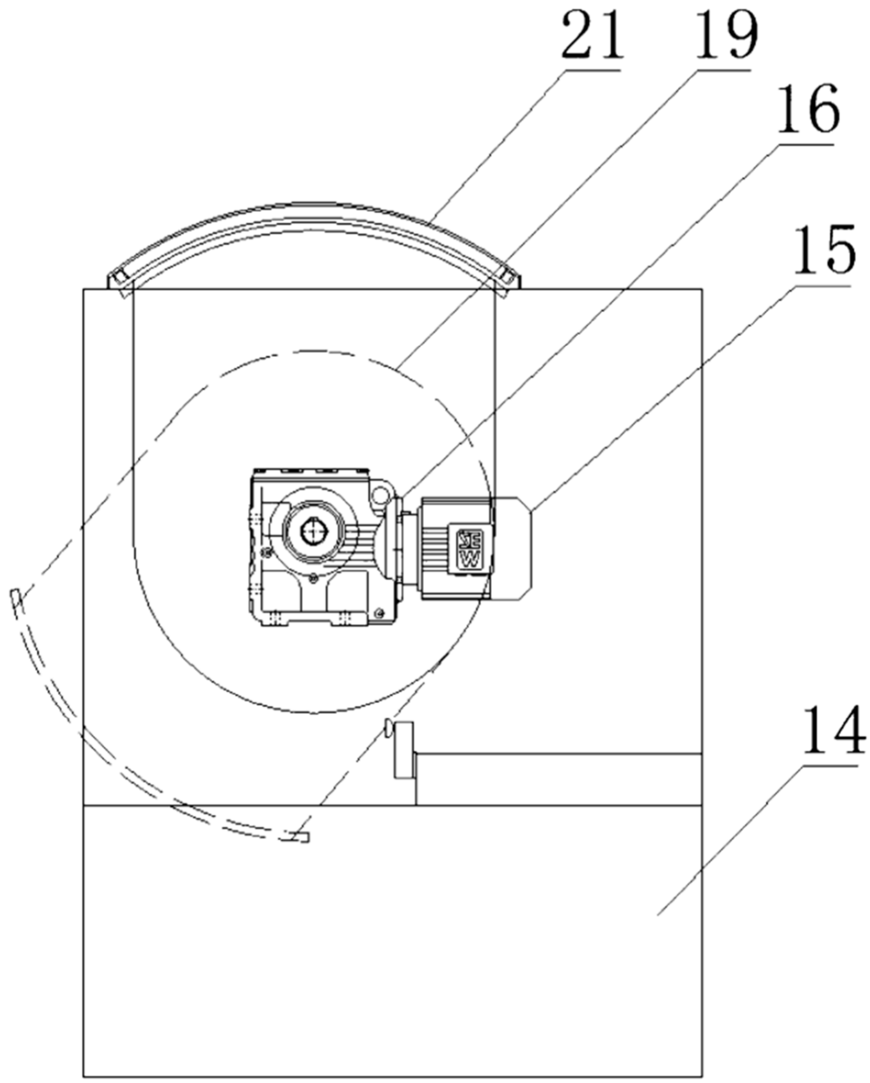


FIG. 5

**INTERNATIONAL SEARCH REPORT**

International application No.
**PCT/CN2024/115108**

**A. CLASSIFICATION OF SUBJECT MATTER**

A24B15/14(2006.01)i; A24B15/18(2006.01)i; A24D3/16(2006.01)i; A24D3/17(2020.01)i; A24B9/00(2006.01)i

According to International Patent Classification (IPC) or to both national classification and IPC

**B. FIELDS SEARCHED**

Minimum documentation searched (classification system followed by classification symbols)

IPC:A24B,A24D,A24F

Documentation searched other than minimum documentation to the extent that such documents are included in the fields searched

Electronic data base consulted during the international search (name of data base and, where practicable, search terms used)

CNTXT, ENTXTC, VEN, CJFD: 中烟, 烟草, 烟灰, 雾化, 发烟, 无机, 疏水, 吸潮, 防潮, 甘油, 丙二醇, 炭, 硅藻土, 稠膏, 薄片, 粘, 复合, tobacco, cigarette, inorganic, atomiz+, coat+, moisture, water w repellent, glycerin, C, diatomite, cream, propylene w glycol, slice, wafer, bond+, compound, composite

**C. DOCUMENTS CONSIDERED TO BE RELEVANT**

| Category* | Citation of document, with indication, where appropriate, of the relevant passages | Relevant to claim No. |
|---|---|---|
| PX | CN 118020990 A (CHINA TOBACCO HUNAN INDUSTRIAL CO., LTD.) 14 May 2024 (2024-05-14)<br>claims 1-18 | 1-18 |
| A | CN 109730368 A (YUNNAN TOBACCO BIOLOGICAL TECHNOLOGY CO., LTD.) 10 May 2019 (2019-05-10)<br>description, paragraphs 11-87 | 1-18 |
| A | CN 105747264 A (CHINA TOBACCO GUIZHOU INDUSTRIAL CO., LTD.) 13 July 2016 (2016-07-13)<br>entire document | 1-18 |
| A | CN 112438424 A (CHINA TOBACCO HUNAN INDUSTRIAL CO., LTD.) 05 March 2021 (2021-03-05)<br>entire document | 1-18 |
| A | CN 112515243 A (YUNNAN CHUNXU BIOTECHNOLOGY CO., LTD.) 19 March 2021 (2021-03-19)<br>entire document | 1-18 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 October 2024** | **19 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2024/115108**

**C. DOCUMENTS CONSIDERED TO BE RELEVANT**

| Category* | Citation of document, with indication, where appropriate, of the relevant passages | Relevant to claim No. |
|---|---|---|
| A | CN 113876018 A (CHINA TOBACCO HUBEI INDUSTRIAL LLC et al.) 04 January 2022 (2022-01-04)<br>entire document | 1-18 |
| A | CN 114009826 A (YUNNAN CHINA TOBACCO NEW MATERIAL TECHNOLOGY CO., LTD. et al.) 08 February 2022 (2022-02-08)<br>entire document | 1-18 |
| A | CN 116268526 A (CHINA TOBACCO ANHUI INDUSTRIAL CO., LTD.) 23 June 2023 (2023-06-23)<br>entire document | 1-18 |
| A | KR 19980072035 A (YANG, G. G.) 26 October 1998 (1998-10-26)<br>entire document | 1-18 |

Form PCT/ISA/210 (second sheet) (July 2022)

**INTERNATIONAL SEARCH REPORT**
**Information on patent family members**

International application No.
**PCT/CN2024/115108**

| Patent document cited in search report | | | Publication date (day/month/year) | Patent family member(s) | | | Publication date (day/month/year) |
|---|---|---|---|---|---|---|---|
| CN | 118020990 | A | 14 May 2024 | None | | | |
| CN | 109730368 | A | 10 May 2019 | None | | | |
| CN | 105747264 | A | 13 July 2016 | WO | 2017181685 | A1 | 26 October 2017 |
| | | | | EP | 3263276 | A1 | 03 January 2018 |
| | | | | EP | 3263276 | A4 | 05 December 2018 |
| CN | 112438424 | A | 05 March 2021 | None | | | |
| CN | 112515243 | A | 19 March 2021 | None | | | |
| CN | 113876018 | A | 04 January 2022 | None | | | |
| CN | 114009826 | A | 08 February 2022 | None | | | |
| CN | 116268526 | A | 23 June 2023 | None | | | |
| KR | 19980072035 | A | 26 October 1998 | KR | 100269091 | B1 | 16 October 2000 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2023114095167
- CN 118020990 A
- CN 111165870 A
- CN 112493528 A